# EUROPEAN PATENT SPECIFICATION

(11) **EP 4 508 779 B1**
(45) Date of publication and mention of the grant of the patent: **19.08.2026**
(21) Application number: 23717747.2
(22) Date of filing: 23.03.2023
(51) Int. Cl.: H04L 1/1607

(54) **PROTECTED BLOCK ACKNOWLEDGMENT MECHANISM**
GESCHÜTZTER BLOCKBESTÄTIGUNGS MECHANISMUS
MÉCANISME D'ACCUSÉ DE RÉCEPTION DE BLOC PROTÉGÉS

(30) Priority: 14.04.2022 IN 202241022313
(43) Date of publication of application: 19.02.2025
(73) Proprietor: QUALCOMM INCORPORATED, San Diego, California 92121-1714 (US)
(72) Inventor: PATIL, Abhishek Pramod, San Diego, California 92121-1714 (US); CHERIAN, George, San Diego, California 92121-1714 (US); ASTERJADHI, Alfred, San Diego, California 92121-1714 (US); HO, Sai Yiu Duncan, San Diego, California 92121-1714 (US); NAIK, Gaurang, San Diego, California 92121-1714 (US); AJAMI, Abdel Karim, San Diego, California 92121-1714 (US); SUN, Yanjun, San Diego, California 92121-1714 (US); MALINEN, Jouni Kalevi, San Diego, California 92121-1714 (US); KUPPA, Srikant, San Diego, California 92121-1714 (US); KARTHIC, Padmanabhan Venkataraman, San Diego, California 92121-1714 (US); FREDERIKS, Guido Robert, San Diego, California 92121-1714 (US); CHO, James Simon, San Diego, California 92121-1714 (US)
(74) Representative: Bardehle Pagenberg Partnerschaft mbB Patentanwälte Rechtsanwälte
(86) International application number: PCT/US2023/016149
(87) International publication number: WO 2023/200572

(56) References cited:
- ABHISHEK PATIL (QUALCOMM): "LB258: Resolution for CIDs related to protected BA", vol. 802.11m, no. 1, 20 January 2022 (2022-01-20), pages 1 - 10, XP068188528, Retrieved from the Internet <URL:https://mentor.ieee.org/802.11/dcn/22/11-22-0082-01-000m-lb258-resolution-for-cids-related-to-protected-ba.docx> [retrieved on 20220120]

## Description

### CROSS-REFERENCE TO RELATED APPLICATIONS

This application claims priority to Indian Patent Application No. 202241022313, filed April 14, 2022.

### TECHNICAL FIELD

Certain aspects of the present disclosure generally relate to wireless communications and, more particularly, to protecting various types of messages in wireless networks.

### DESCRIPTION OF THE RELATED TECHNOLOGY

Wireless communications networks are widely deployed to provide various communications services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

In order to address the issue of increasing bandwidth requirements that are demanded for wireless communications systems, different schemes are being developed to allow multiple user terminals to communicate with a single access point by sharing the channel resources while achieving high data throughputs. Multiple Input Multiple Output (MIMO) technology represents one such approach that has emerged as a popular technique for communications systems. MIMO technology has been adopted in several wireless communications standards such as the Institute of Electrical and Electronics Engineers (IEEE) 802.11 standard. The IEEE 802.11 denotes a set of Wireless Local Area Network (WLAN) air interface standards developed by the IEEE 802.11 committee for short-range communications (such as tens of meters to a few hundred meters).

Document IEEE 802.11-22/0082r1 relates to resolution for CIDs related to Protected Block Acknowledgement Procedure.

### SUMMARY

The systems, methods and devices of this disclosure each have several innovative aspects, no single one of which is solely responsible for the desirable attributes disclosed herein.

Certain aspects of the present disclosure provide a method for wireless communication at a first wireless device. The method generally includes generating a protected frame that indicates: 1) an updated starting sequence number (SSN) of a block acknowledgment (BA) window and 2) an intended purpose of the protected frame as a request to update a BA window with the updated SSN, outputting, for transmission to a second wireless device that the first wireless device has established a protected block acknowledgment (BA) agreement with, the protected frame, generating multiple medium access control (MAC) Protocol Data Units (MPDUs) with SNs within the updated BA window, and outputting, for transmission to the second wireless device, the multiple MPDUs.

Certain aspects of the present disclosure provide a method for wireless communication at a second wireless device. The method generally includes obtaining, from a first wireless device that the second wireless device has established a protected block acknowledgment (BA) agreement with, a protected frame that indicates: 1) an updated starting sequence number (SSN) of a block acknowledgment (BA) window and 2) an intended purpose of the protected frame as a request to update a BA window with the updated SSN ; and maintaining a bitmap to track medium access control (MAC) Protocol Data Units (MPDUs) with SNs within the updated BA window have been successfully obtained by the second wireless device.

Certain aspects of the present disclosure provide a method for wireless communication at a wireless device. The method generally includes obtaining a data frame with a medium access control (MAC) Protocol Data Unit (MPDU) that fails at least one of a decryption check or an integrity check; and clearing, in response to the failure: entries in the bitmap used to track MPDUs that have been successfully obtained by the wireless device; or an entry, corresponding to the received MPDU, in the bitmap used to track MPDUs that have been successfully obtained by the wireless device.

Certain aspects of the present disclosure provide a method for wireless communication at a first wireless device. The method generally includes generating a data frame with a medium access control (MAC) Protocol Data Unit (MPDU) encrypted using additional authentication data (AAD) applied to a sequence number (SN) of the MPDU; and outputting the data frame for transmission to a second wireless device that the first wireless device has established a protected block acknowledgment (BA) agreement with.

Certain aspects of the present disclosure provide a method for wireless communication at a second wireless device. The method generally includes obtaining a data frame from a first wireless device that the first wireless device has established a protected block acknowledgment (BA) agreement with; and extracting a medium access control (MAC) Protocol Data Unit (MPDU) from the data frame, based on an additional authentication data (AAD) deconstruction using a sequence number (SN) of the MPDU.

Certain aspects of the present disclosure provide a method for wireless communication at a first wireless device. The method generally includes modifying an original medium access control (MAC) Protocol Data Unit (MPDU) by performing an operation with a sequence number (SN) of the MPDU to obtain a modified MPDU; generating a data frame with an encrypted version of the modified MPDU; and outputting the data frame for transmission to a second wireless device that the first wireless device has established a protected block acknowledgment (BA) agreement with.

Certain aspects of the present disclosure provide a method for wireless communication at a second wireless device. The method generally includes obtaining, from a first wireless device that the second wireless device has established a protected block acknowledgment (BA) agreement with, a data frame with a sequence number (SN) modified version of a medium access control (MAC) Protocol Data Unit (MPDU); performing a cyclic redundancy check (CRC) test based on the modified version of the MPDU; and if the CRC test passes, performing an operation with the SN to recover an original MPDU from the modified version of the MPDU if the CRC test passed; and updating a BA bitmap to indicate successful receipt of the original MPDU.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure, and the description may admit to other equally effective aspects.
**FIG. 1** is a diagram of an example wireless communications network, in accordance with certain aspects of the present disclosure.
**FIG. 2** is a block diagram of an example access point (AP) and example wireless stations (STAs), in accordance with certain aspects of the present disclosure.
**FIG. 3** is a call flow diagram illustrating an example block acknowledgment procedure, in accordance with aspects of the present disclosure.
**FIG. 4** is a call flow diagram illustrating an example mechanism for protecting against a fake block acknowledgment request (BAR), in accordance with aspects of the present disclosure.
**FIG. 5** is a call flow diagram illustrating an example mechanism for protecting against a fake a data frame, in accordance with aspects of the present disclosure.
**FIGs. 6A** and **6B** illustrate example logic and an example sequence control field for protecting against a fake data frame, in accordance with aspects of the present disclosure.
**FIG. 7** is a call flow diagram illustrating an example mechanism for protecting against a replay of a data frame with a modified sequence number, in accordance with aspects of the present disclosure.
**FIG. 8** illustrates example logic for protecting against a replay of a data frame with a modified sequence number, in accordance with aspects of the present disclosure.
**FIG. 9** illustrates example operations for wireless communications at a wireless device, in accordance with certain aspects of the present disclosure.
**FIG. 10** illustrates example operations for wireless communications at a wireless device, in accordance with certain aspects of the present disclosure.
**FIG. 11** illustrates example operations for wireless communications at a wireless device, in accordance with certain aspects of the present disclosure.
**FIG. 12** illustrates example operations for wireless communications at a wireless device, in accordance with certain aspects of the present disclosure.
**FIG. 13** illustrates example operations for wireless communications at a wireless device, in accordance with certain aspects of the present disclosure.
**FIG. 14** illustrates example operations for wireless communications at a wireless device, in accordance with certain aspects of the present disclosure.
**FIG. 15** illustrates example operations for wireless communications at a wireless device, in accordance with certain aspects of the present disclosure.
**FIG. 16** illustrates example components capable of performing operations described herein.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure generally relate to wireless communications and, more particularly, to protecting various types of messages in wireless networks.

There are various types of attacks that a hostile device (an attacker) may carry out to cause harm in a wireless network. Examples of such attacks include injecting a block acknowledgment request (BAR) frame, injecting a fake data frame, and replaying a genuine data frame, but with a modified sequence number (SN).

Each of these types of attacks can impact system performance, not only due the consumption of bandwidth, but also the processing overhead and potential disruption in delivery of valid frames (denial of service). In some cases, an attack could go undetected and, in such cases, disrupt context of scoreboard that is maintained at a receiver to successfully received packets, by SN.

Aspects of the present disclosure propose various mechanisms for protecting against these types of attacks. As a result, the mechanisms may help prevent the potential disruption in valid frame delivery and, thus, may help improve overall system performance.

### Overview of Wireless Communication Systems

Various aspects of the disclosure are described more fully hereinafter with reference to the accompanying drawings. This disclosure may, however, be implemented in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be implemented by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

The techniques described herein may be used for various broadband wireless communications systems, including communications systems that are based on an orthogonal multiplexing scheme. Examples of such communications systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each subcarrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (such as implemented within or performed by) a variety of wired or wireless apparatuses (such as nodes). In some aspects, a wireless node implemented in accordance with the teachings herein may comprise an access point or an access terminal.

An access point ("AP") may comprise, be implemented as, or known as a Node B, Radio Network Controller ("RNC"), evolved Node B (eNB), Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as a subscriber station, a subscriber unit, a mobile station (MS), a remote station, a remote terminal, a user terminal (UT), a user agent, a user device, user equipment (UE), a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (such as a cellular phone or smart phone), a computer (such as a laptop), a tablet, a portable communications device, a portable computing device (such as a personal data assistant), an entertainment device (such as a music or video device, or a satellite radio), a global positioning system (GPS) device, or any other suitable device that is configured to communicate via a wireless or wired medium. In some aspects, the node is a wireless node. Such wireless node may provide, for example, connectivity for or to a network (such as a wide area network such as the Internet or a cellular network) via a wired or wireless communications link.

### Example Wireless Communication System

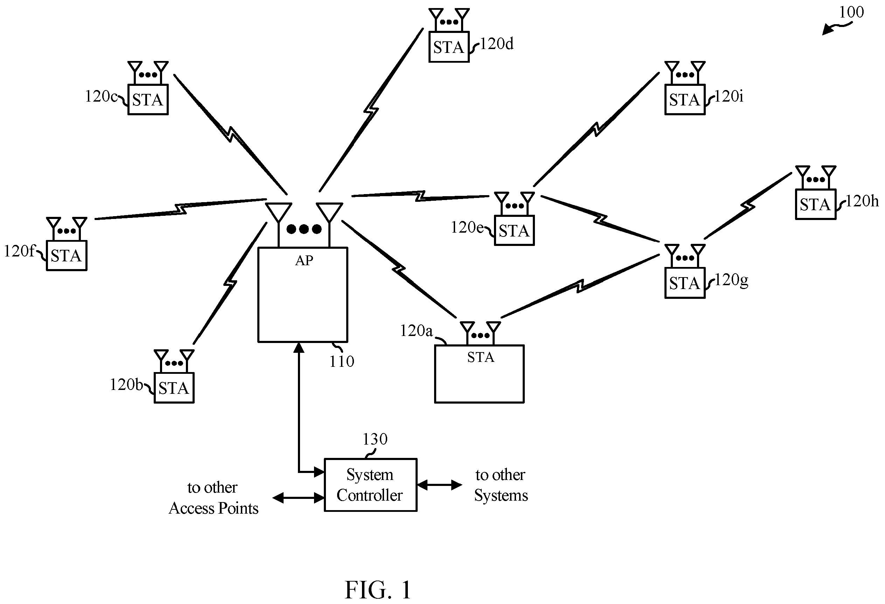

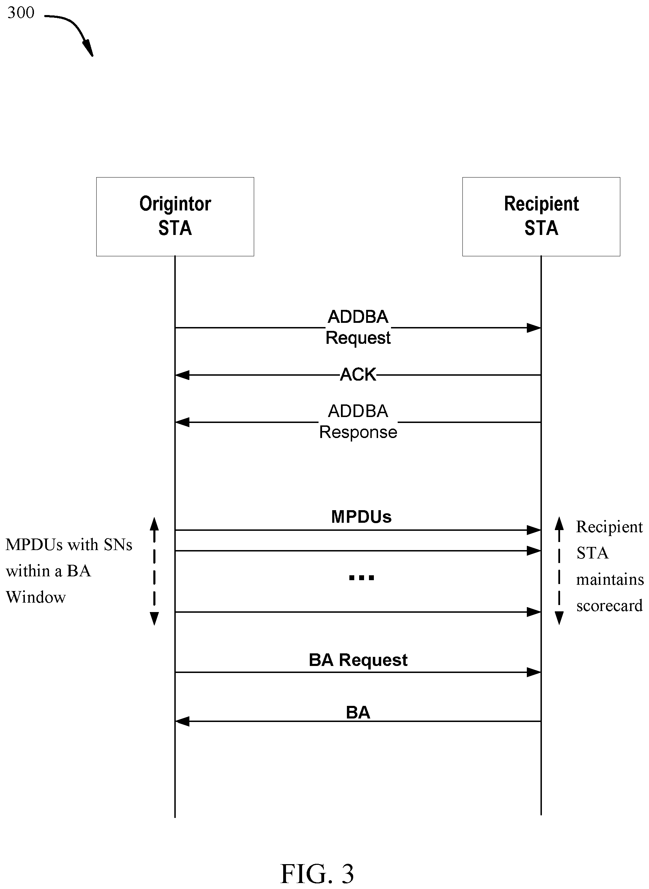

**FIG. 1** is a diagram illustrating an example wireless communication system 100, in accordance with certain aspects of the present disclosure. System 100 may be a multiple-input multiple-output (MIMO)/multi-link operation (MLO) system 100. In aspects, AP 110 and wireless station 120a may be MLDs as further described herein with respect to **FIG. 3****.**

For simplicity, only one AP 110 is shown in **FIG. 1****.** An AP is generally a fixed station that communicates with the wireless STAs and may also be referred to as a base station (BS) or some other terminology. A wireless STA may be fixed or mobile and may also be referred to as a mobile STA, a wireless device, or some other terminology. AP 110 may communicate with one or more wireless STAs 120 at any given moment on the downlink (DL) and/or uplink (UL). The DL (i.e., forward link) is the communication link from AP 110 to the wireless STAs 120, and the UL (i.e., reverse link) is the communication link from the wireless STAs 120 to AP 110. A wireless STA 120 may also communicate peer-to-peer with another wireless STA 120, for example, via a direct link such as a tunneled direct link setup (TDLS). A system controller 130 may be in communication with and provide coordination and control for the access points.

While portions of the following disclosure will describe wireless STAs 120 capable of communicating via Spatial Division Multiple Access (SDMA), for certain aspects, the wireless STAs 120 may also include some wireless STAs 120 that do not support SDMA. Thus, for such aspects, an AP 110 may be configured to communicate with both SDMA and non-SDMA wireless STAs 120. This approach may conveniently allow older versions of wireless STAs 120 ("legacy" stations) to remain deployed in an enterprise, extending their useful lifetime, while allowing newer SDMA wireless STAs 120 to be introduced as deemed appropriate.

System 100 employs multiple transmit and multiple receive antennas for data transmission on the DL and UL. AP 110 is equipped with *Nₐₚ* antennas and represents the multiple-input (MI) for DL transmissions and the multiple-output (MO) for UL transmissions. A set of *K* selected wireless stations 120 collectively represents the multiple-output for DL transmissions and the multiple-input for UL transmissions. For pure SDMA, it is desired to have *N ₐₚ* ≥ *K* ≥ 1 if the data symbol streams for the *K* wireless STAs are not multiplexed in code, frequency or time by some means. *K* may be greater than *N ₐₚ* if the data symbol streams can be multiplexed using TDMA technique, different code channels with CDMA, disjoint sets of subbands with OFDM, and so on. Each selected wireless STA transmits user-specific data to and/or receives user-specific data from the access point. In general, each selected wireless STA may be equipped with one or multiple antennas (i.e., *Nₛₜₐ* ≥ 1). The *K* selected wireless STAs can have the same or different number of antennas.

System 100 may be a time division duplex (TDD) system or a frequency division duplex (FDD) system. For a TDD system, the DL and UL share the same frequency band. For an FDD system, the DL and UL use different frequency bands. System 100 may also utilize a single carrier or multiple carriers for transmission. Each wireless STA may be equipped with a single antenna or multiple antennas. System 100 may also be a TDMA system if wireless STAs 120 share the same frequency channel by dividing transmission/reception into different time slots, each time slot being assigned to a different wireless STA 120.

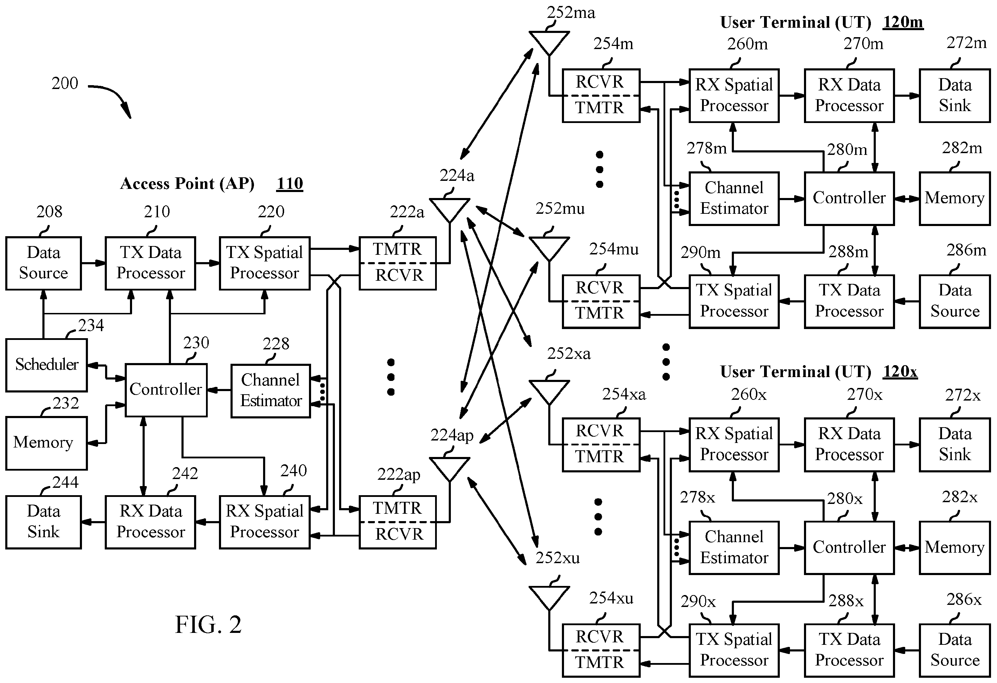

**FIG. 2** illustrates a block diagram of AP 110 and two wireless STAs 120m and 120x in a MIMO/MLO system, such as system 100, in accordance with certain aspects of the present disclosure. In certain aspects, AP 110 and/or wireless STAs 120m and 120x may perform various techniques to ensure that a non-AP MLD is able to receive a group addressed frame.

AP 110 is equipped with *Nₐₚ* antennas 224a through 224t. Wireless STA 120m is equipped with *N_{sta,m}* antennas 252ma through 252mu, and wireless STA 120x is equipped with *N_{sta,x}* antennas 252xa through 252xu. AP 110 is a transmitting entity for the DL and a receiving entity for the UL. Each wireless STA 120 is a transmitting entity for the UL and a receiving entity for the DL. As used herein, a "transmitting entity" is an independently operated apparatus or device capable of transmitting data via a wireless channel, and a "receiving entity" is an independently operated apparatus or device capable of receiving data via a wireless channel. The term communication generally refers to transmitting, receiving, or both. In the following description, the subscript "DL" denotes the downlink, the subscript "UL" denotes the uplink, *N_{UL}* wireless STAs are selected for simultaneous transmission on the uplink, *N_{DL}* wireless STAs are selected for simultaneous transmission on the downlink, *N_{UL}* may or may not be equal to *N_{DL},* and *N_{UL}* and *N_{DL}* may be static values or can change for each scheduling interval. The beam-steering or some other spatial processing technique may be used at the access point and wireless station.

On the UL, at each wireless STA 120 selected for UL transmission, a transmit (TX) data processor 288 receives traffic data from a data source 286 and control data from a controller 280. TX data processor 288 processes (e.g., encodes, interleaves, and modulates) the traffic data for the wireless station based on the coding and modulation schemes associated with the rate selected for the wireless STA and provides a data symbol stream. A TX spatial processor 290 performs spatial processing on the data symbol stream and provides *N_{sta,m}* transmit symbol streams for the *N_{sta,m}* antennas. Each transceiver (TMTR) 254 receives and processes (e.g., converts to analog, amplifies, filters, and frequency upconverts) a respective transmit symbol stream to generate an uplink signal. *N_{sta,m}* transceivers 254 provide *N_{sta,m}* UL signals for transmission from *N_{sta,m}* antennas 252 to AP 110.

*N_{UL}* wireless STAs may be scheduled for simultaneous transmission on the uplink. Each of these wireless STAs performs spatial processing on its data symbol stream and transmits its set of transmit symbol streams on the UL to the AP 110.

At AP 110, *Nₐₚ* antennas 224a through 224ap receive the UL signals from all *N_{UL}* wireless STAs transmitting on the UL. Each antenna 224 provides a received signal to a respective transceiver (RCVR) 222. Each transceiver 222 performs processing complementary to that performed by transceiver 254 and provides a received symbol stream. A receive (RX) spatial processor 240 performs receiver spatial processing on the *Nₐₚ* received symbol streams from *Nₐₚ* transceiver 222 and provides *N_{UL}* recovered UL data symbol streams. The receiver spatial processing is performed in accordance with the channel correlation matrix inversion (CCMI), minimum mean square error (MMSE), soft interference cancellation (SIC), or some other technique. Each recovered UL data symbol stream is an estimate of a data symbol stream transmitted by a respective wireless station. An RX data processor 242 processes (e.g., demodulates, deinterleaves, and decodes) each recovered uplink data symbol stream in accordance with the rate used for that stream to obtain decoded data. The decoded data for each wireless STA may be provided to a data sink 244 for storage and/or a controller 230 for further processing.

On the DL, at AP 110, a TX data processor 210 receives traffic data from a data source 208 for *N_{DL}* wireless stations scheduled for downlink transmission, control data from a controller 230, and possibly other data from a scheduler 234. The various types of data may be sent on different transport channels. TX data processor 210 processes (e.g., encodes, interleaves, and modulates) the traffic data for each wireless station based on the rate selected for that wireless station. TX data processor 210 provides *N_{DL}* DL data symbol streams for the *N_{DL}* wireless stations. A TX spatial processor 220 performs spatial processing (such as a precoding or beamforming, as described in the present disclosure) on the *N_{DL}* DL data symbol streams, and provides *Nₐₚ* transmit symbol streams for the *Nₐₚ* antennas. Each transceiver 222 receives and processes a respective transmit symbol stream to generate a DL signal. *Nₐₚ* transceivers 222 providing *Nₐₚ* DL signals for transmission from *Nₐₚ* antennas 224 to the wireless STAs.

At each wireless STA 120, *N_{sta,m}* antennas 252 receive the *Nₐₚ* DL signals from access point 110. Each transceiver 254 processes a received signal from an associated antenna 252 and provides a received symbol stream. An RX spatial processor 260 performs receiver spatial processing on *N_{sta,m}* received symbol streams from *N_{sta,m}* transceiver 254 and provides a recovered DL data symbol stream for the wireless station. The receiver spatial processing is performed in accordance with the CCMI, MMSE or some other technique. An RX data processor 270 processes (e.g., demodulates, deinterleaves and decodes) the recovered DL data symbol stream to obtain decoded data for the wireless station.

At each wireless STA 120, a channel estimator 278 estimates the DL channel response and provides DL channel estimates, which may include channel gain estimates, SNR estimates, noise variance and so on. Similarly, a channel estimator 228 estimates the UL channel response and provides UL channel estimates. Controller 280 for each wireless STA typically derives the spatial filter matrix for the wireless station based on the downlink channel response matrix *H_{dn,m}* for that wireless station. Controller 230 derives the spatial filter matrix for the AP based on the effective UL channel response matrix *H_{up,eff}.* Controller 280 for each wireless STA may send feedback information (e.g., the downlink and/or uplink eigenvectors, eigenvalues, SNR estimates, and so on) to the AP. Controllers 230 and 280 also control the operation of various processing units at AP 110 and wireless STA 120, respectively.

**FIG. 3** illustrates various components that may be utilized in a wireless device 302 that may be employed within system 100, in accordance with certain aspects of the present disclosure. Wireless device 302 is an example of a device that may be configured to implement the various methods described herein. Wireless device 302 may be an AP 110 or a user terminal.

Wireless device 302 may include a processor 304 which controls operation of wireless device 302. Processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

Wireless device 302 may also include a housing 308 that may include a transmitter 310 and a receiver 312 to allow transmission and reception of data between the wireless device 302 and a remote location. Transmitter 310 and receiver 312 may be combined into a transceiver 314. A single or a plurality of transmit antennas 316 may be attached to the housing 308 and electrically coupled to the transceiver 314. Wireless device 302 may also include (not shown) multiple transmitters, multiple receivers, and multiple transceivers.

Wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. Wireless device 302 may also include a digital signal processor (DSP) 320 for use in processing signals.

The various components of wireless device 302 may be coupled together by a bus system 322, which may include a power bus, a control signal bus, and a status signal bus in addition to a data bus.

Certain aspects of the present disclosure are directed to apparatus and techniques for implementing multi-link communications. For example, certain aspects provide techniques for managing data flows for across multiple links by an MLD. Multiple bands may be implemented for wireless devices. For example, a wireless device may be able to support at least one of a 2.4 GHz band, a 5 GHz band or a 6 GHz band and operate over more than one link spread over these bands. With multi-link communications, data flows may be transmitted across multiple wireless links which may be associated with different bands.

### Example Block Acknowledgment Mechanism

Block acknowledgment (Block Ack or BA) generally refers to a mechanism of combining acknowledgments of multiple MPDUs into a single frame. As illustrated in **FIG. 3****,** a BA session may be established (negotiated) between a transmitting station (originator STA) and a receiving station (recipient STA) via an exchange of Add BA (ADDBA) Request and Response frames. In some cases, the originator STA may first confirm the recipient STA is capable of participating in a secure BA session, based on BA capability bits. Also note, the originator STA can be an AP or a non-AP device. Similarly, a recipient STA can be an AP or a non-AP device. In other words, each BA session that is negotiated is for a particular direction (UL or DL) and per TID.

If the recipient STA is capable of participating in a secure BA session, the originator STA sends an ADDBA Request frame indicating a traffic ID (TID) for which the BA session is being set up. The recipient STA shall respond by an ADDBA Response frame. The recipient STA has the option of accepting or rejecting the request. When the recipient STA accepts, then a protected BA agreement is said to exist between the originator STA and the recipient STA.

After a protected or unprotected Block ACK Session is negotiated between an AP and a station, the AP and the WLAN station can participate in a Contention Free Burst, wherein blocks of QoS data frames (MPDUs) may be transmitted from the originator to the recipient. The recipient STA may maintain a scorecard for MPDUs received within a certain window, with bits indicating which MPDUs within a sequence were successfully received.

The originator requests acknowledgment of outstanding QoS data frames by sending a BA request frame. The request can be implicitly carried within the Data frame itself (signaled in a field in the MAC header) or the request can be sent as an explicit frame. In an unprotected BA setup, the originator can send a BlockAck Request (BAR) frame. In response, the recipient STA may send the BA, with a bitmap reflective of the scorecard, indicating the number of packets successfully received by the AP.

### Example Mechanism for Protecting Against a Fake BAR frame

The BAR frame is a Control frame and all Control frames are not protected (or encrypted). In some cases, a hostile device (an attacker) may carry out an attack by transmitting (injecting) a fake BAR frame. This type of attack is possible because, in conventional wireless systems, BAR frames are not protected.

A BAR frame is typically used for two general purposes. The first purpose, as noted above, is to obtain the ACK information for a previous burst of frames sent in a transmit opportunity (TXOP). The second purpose is to clear the receive re-order buffer at the receiver.

The injection of a fake BAR frame may have the following impact. An attacker may set a Block Ack Starting Sequence Control subfield in the BAR frame to an arbitrary value. If this type of attack goes unnoticed, it will disrupt the reorder buffer and scoreboard context at the recipient. This disruption may result in a change to the start sequence number (SSN) and lead confusion as to the recipient next expected sequence number (WinStartB). This may result in a denial-of-service attack, where the attacker can block delivery of genuine Data frames for a specific TID.

According to a conventional procedure, STAs that have established a protected BA agreement (session) do not use the SSN field in a BAR frame for updating WinStartB. Instead, an originator STA transmits a protected Management frame (i.e., ADDBA Request frame) to update WinStartB. A recipient ignores other fields of the ADDBA Request frame, except for the SSN.

This existing procedure creates potential issues, however, as an originator is allowed to transmit an ADDBA Request frame to update parameters (such as timeout) for an existing BA agreement. Aspects of the present disclosure, however, may address these potential issues by providing a mechanism to differentiate between an ADDBA Request frame sent to advance the window (WinStartB) from an ADDBA Request frame sent to update parameters. Further, aspects of the present disclosure may help relieve ambiguity regarding whether an ADDBA Response frame is required when an ADDBA Request is sent to advance the window.

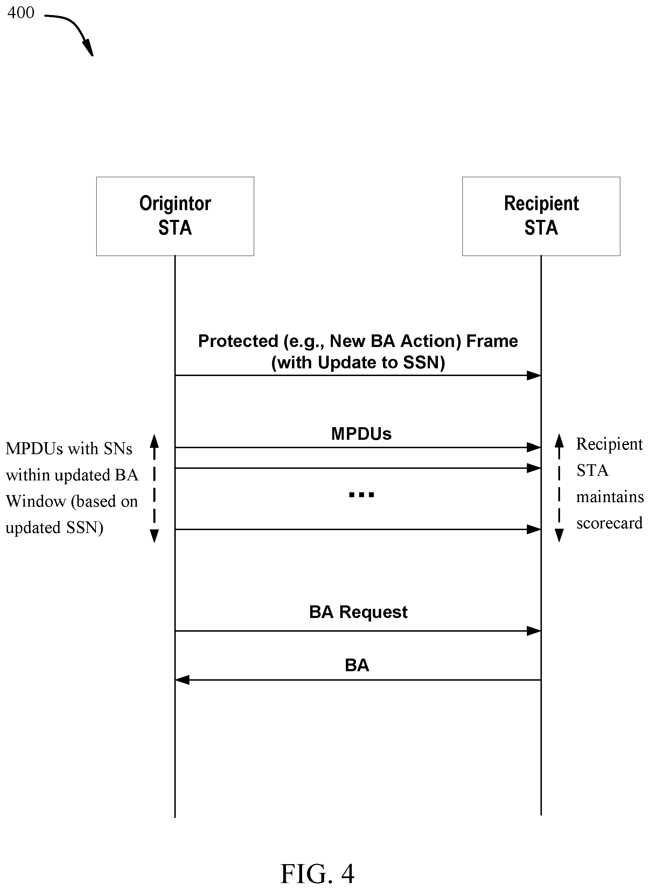

As illustrated in **FIG. 4****,** certain aspects of the present disclosure may help protect against a fake BAR by establishing a protected BA agreement using a frame that indicates: 1) an updated starting sequence number (SSN) of a block acknowledgment (BA) window and 2) an intended purpose of the protected frame as a request to update a BA window with the updated SSN. There are various options for how this frame may be constructed.

For example, according to a first option, a new Block Ack action frame may be defined. Defining a new Block Ack action frame may provide a clear separation (distinction) between a legacy protected BA procedure and an updated procedure proposed herein. Given that typical conventional systems do not implement protected BA frames, such a change (to support this newly defined BA action frame) may have no impact on devices that are already deployed. In case BA action frames are supported, the new frame may be defined in a manner that provides a clear separation from legacy BA procedures. This approach may also help address the case of legacy interoperability where some devices are known to incorrectly advertise support for a protected BA procedure.

One potential benefit of this approach is that some implementations may use a separate processing path for quickly for handling the (newly defined) frame. Typically, other types of management frames are processed on a slower path (than action frames). Using an ADDBA Request frame may force a receiver to use this faster path (e.g., as it may not be able to differentiate between an ADDBA request sent for window advancement or parameter update). Another potential benefit is that this approach may also eliminate the need for an explicit (management) response frame since this newly defined frame is able to be processed quickly. This may help ensure that the originator and receiver are in the same state (in sync) with regard to WinStartO (which generally refers to the lowest sequence number in an SN window) and WinStartB are in sync.

Other potential options to differentiate between an ADDBA Request frame sent to advance the window (WinStartB) from an ADDBA Request sent to update parameters include using an existing field (sub-field) in an Action field of an ADDBA Request frame. For example, a fragment number (Frag Num) may be set to a certain value (e.g., Frag Num = 1) as an indication. Another option is to Use a field in the frame header of an ADDBA Request frame. As frame headers are processed early, this approach may help the receiver quickly determine the intention of the frame and, hence, take a different (faster) path for processing the frame.

### Example Mechanism for Protecting Against a Fake Data Frame

In some cases, an attacker may transmit (inject) a fake data frame, for example, a data frame with an arbitrary sequence number (SN). In a conventional system, this type of attack may not be detected until a decryption/integrity check is performed. Unfortunately, by that point, the scoreboard context (and possibly WinStartR that defines a beginning of a SN window) will get updated.

Certain aspects of the present disclosure may help protect against a fake data frame by having a recipient STA taking certain actions in response to receiving a data frame with an MPDU that fails at least one of a decryption check or an integrity check. As an example, in response to the failure the recipient may clear entries in the bitmap used to track MPDUs that have been successfully received by the wireless device or the recipient may clear an entry, corresponding to the received MPDU, in the bitmap used to track MPDUs that have been successfully received by the wireless device.

In case the recipient STA maintains partial state, then the recipient STA may clear the BA scoreboard context (if a fake data frame is detected). If the recipient STA maintains a full state, if a fake data frame is detected, the recipient STA may not update the value of WinStartR and may clear the BA scoreboard context for that MPDU. This approach may require some implementation changes in order to keep track of MPDUs. As an alternative, a standard specification could mandate or recommend that a STA that negotiates a protected BA shall maintain a partial state.

### Example Mechanism for Protecting Against Replay of a Genuine Data Frame

In some cases, an attacker may carry out an attack by replaying (retransmitting) a genuine data frame. For example, the attacker could record a genuine MPDU (or AMPDU) and replay that recorded (A)MPDU with a modified Sequence Number(or SNs). The attacker may learn of actual SNs as the field carrying SN is not protected. Since the frame is a replayed frame, it should pass decryption and integrity check. As a result, this type of attack may go unnoticed until a packet number (PN)-based replay check is performed. Unfortunately, the PN-based replay check typically comes much later in the processing chain. By this time, the scoreboard context (and possibly WinStartR) will get updated. This may also result in a fake entry in the reorder buffer (and possibly updates WinStartB).

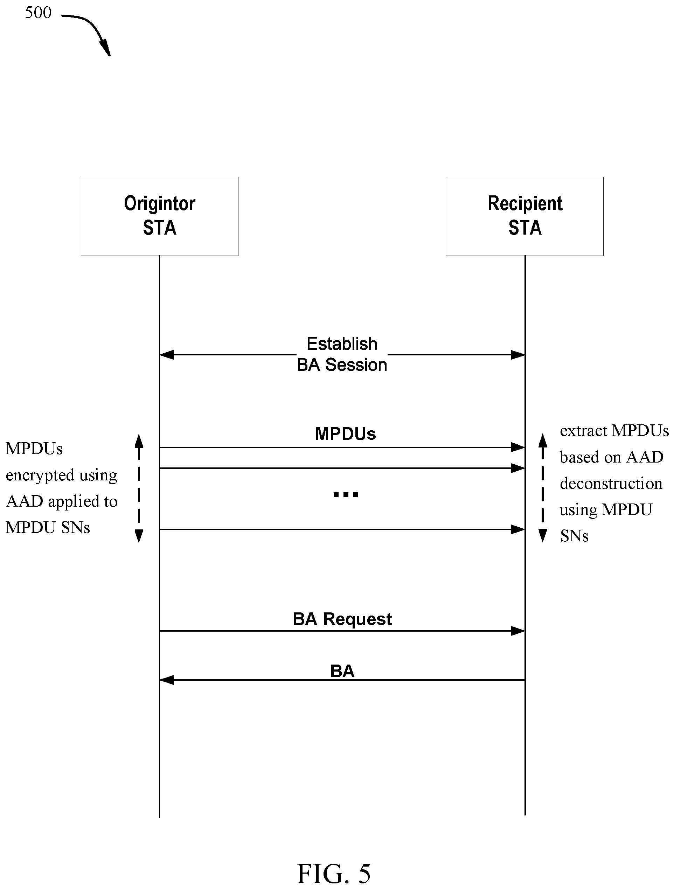

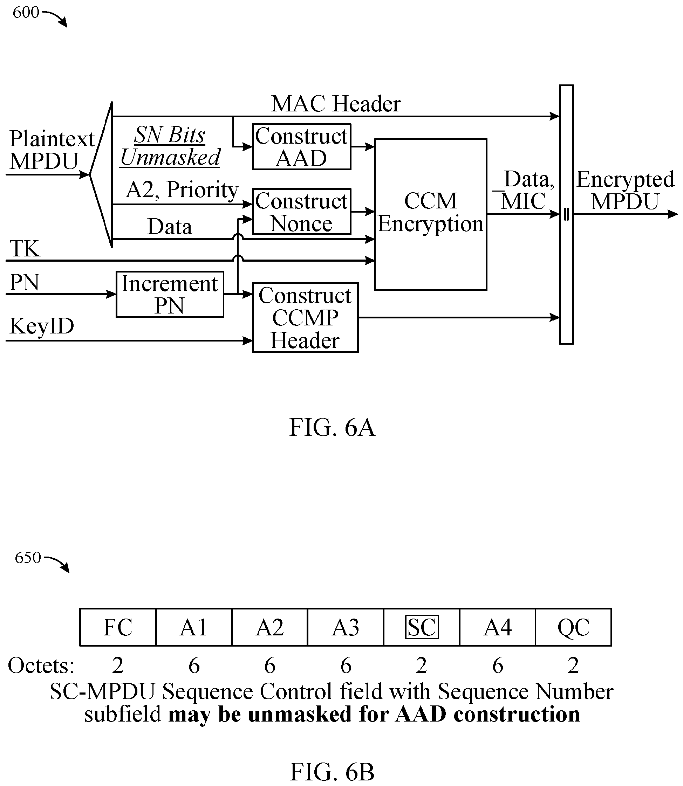

As illustrated by the call flow diagram 500 of **FIG. 5****,** certain aspects of the present disclosure may help protect against a fake data frame by encrypting MPDUs using a using additional authentication data (AAD) applied to a sequence number (SN) of the MPDU. The recipient STA may then extract MPDUs based on AAD deconstruction using MPDU SNs. The block diagram 600 of **FIG. 6A** illustrates how such encryption may be implemented, using AAD construction logic that takes unmasked SN bits as input. As illustrated by the example field 650 of **FIG. 6B****,** this may be accomplished by unmasking bits in an SN subfield of a sequence control (SC) field of an MPDU.

This approach, of protecting against replaying of a genuine Data frame with a modified SN may be implemented by mandating SN protection in a protected BA. In some cases, this may involve an update to a standard to specify that the SN bits not be masked during the computation of AAD. If partial state is used, then flush the scoreboard context for an error condition (SN check failed).

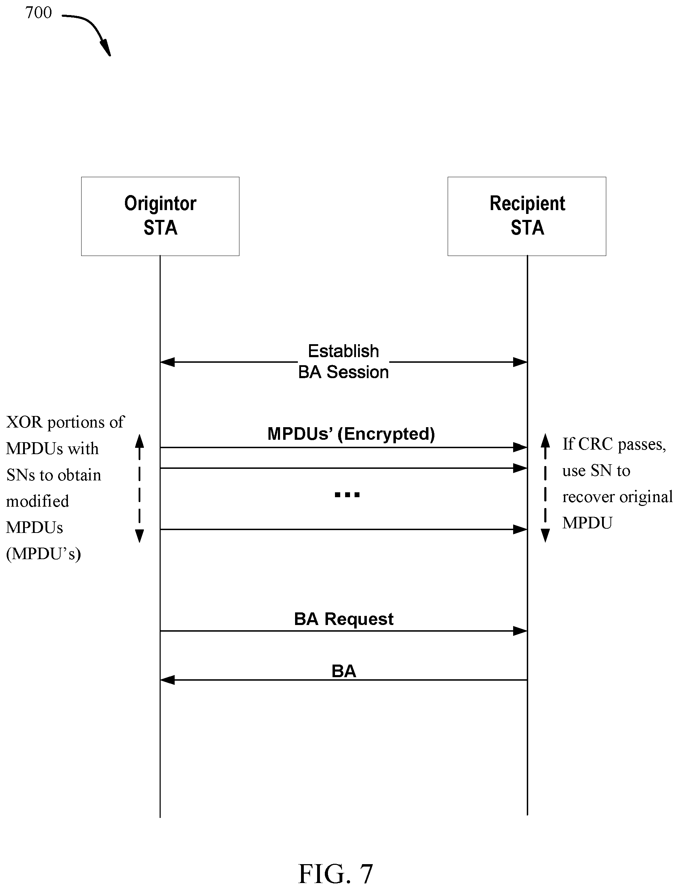

As illustrated by the call flow diagram 700 of **FIG. 7****,** in some cases, at the originator, before encrypting an MPDU, a portion of an MPDU may be logically XORed with the SN to generate a modified MPDU (shown as MPDU'). The modified MPDU (MPDU') is then encrypted and passed further down. The CRC is generated based on the encrypted (modified) MPDU and MAC header (which includes SN in the sequence control field).

At the recipient STA, if the SN is modified (i.e., per the attack scenario described above), the CRC verification will fail for the received MPDU. MPDU is discarded (not passed further up the chain).

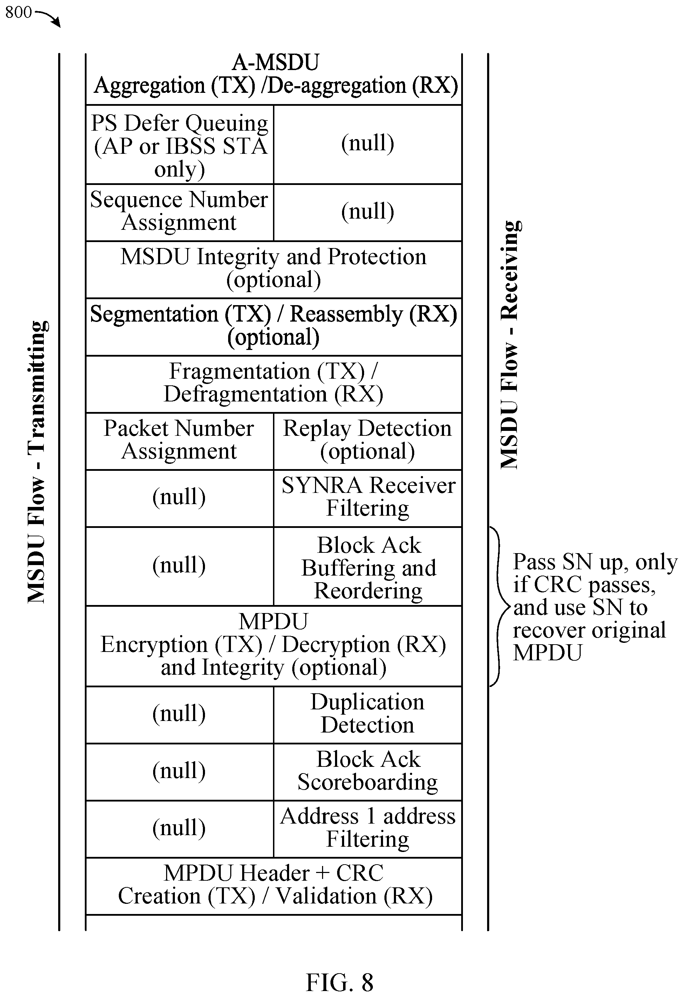

As illustrated by the processing flow diagram 800 of **FIG. 8****,** if the SN is unmodified (i.e., genuine frame), CRC check will be successful. Thus, only if the CRC passes, will the SN be used to recover the original MPDU and passed to scoreboard context and a BA is sent. After MPDU decryption, the SN may be XORed with the portion of the MPDU to recover the original (unmodified MPDU) content. The unmodified MPDU may then be passed to the re-order buffer and later processed for a replay check. In this case, the replay check should pass, because a replayed MPDU with a modified SN would not have reached this point in the processing (and would have been discarded after the CRC check failed).

In some cases, if a replay check fails for an MPDU that was successfully decrypted and passed integrity check, and if the recipient STA maintains partial state, then the recipient STA may not update the value of WinStartB. In this event, the recipient STA may clear the scoreboard context and clear the entry for that MPDU from the reorder buffer. If the recipient STA maintains full state, then the recipient STA may not update the value of WinStartB and WinStartR. In this case, the recipient STA may clear the scoreboard context for that MPDU, and shall clear the entry for that MPDU from the reorder buffer. This approach may involve tracking MPDUs in scoreboard context and re-order buffer.

Aspects of the present disclosure may also help address a scenario where a transmitter (originator STA) receives an unsolicited BA. According to certain aspects, the transmitter may be expected to ignore a BA that comes unexpectedly (e.g., without any soliciting MPDU from the transmitter SIFS before the BA was received). Ignoring an unsolicited BA in this manner may help avoid state disruption at the transmitter.

### Example Operations

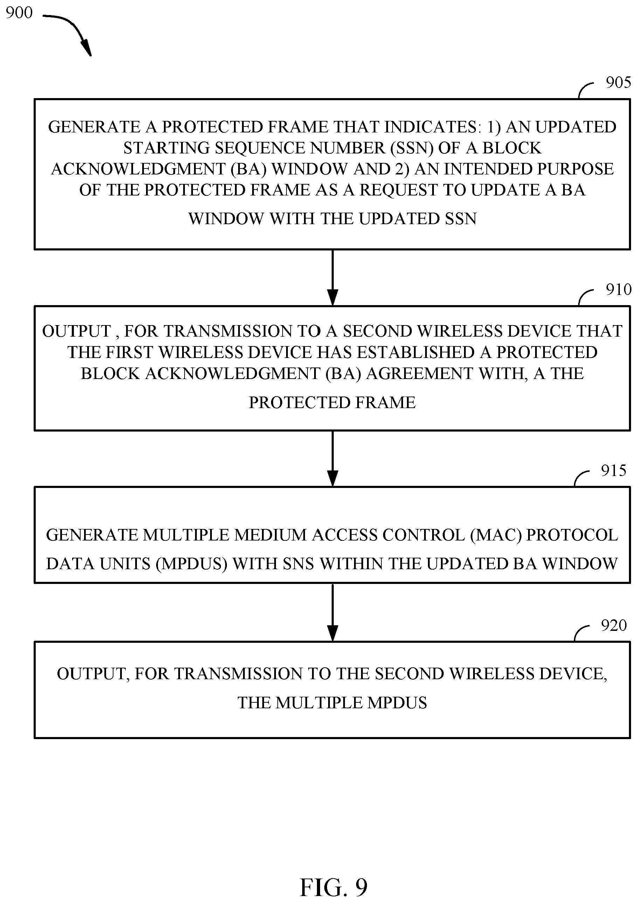

**FIG. 9** is a flow diagram illustrating example operations 900 for wireless communications, in accordance with certain aspects of the present disclosure. Operations 900 may be performed, for example, by a first wireless device, such as a wireless station (STA).

Operations 900 begin, at 905, by generating a protected frame that indicates: 1) an updated starting sequence number (SSN) of a block acknowledgment (BA) window and 2) an intended purpose of the protected frame as a request to update a BA window with the updated SSN. At 910, the first wireless device for transmission to a second wireless device that the first wireless device has established a protected block acknowledgment (BA) agreement with, the protected frame. At 915, the first wireless station generates multiple medium access control (MAC) Protocol Data Units (MPDUs) with SNs within the updated BA window. At 920, the first wireless station outputs, for transmission to the second wireless device, the multiple MPDUs.

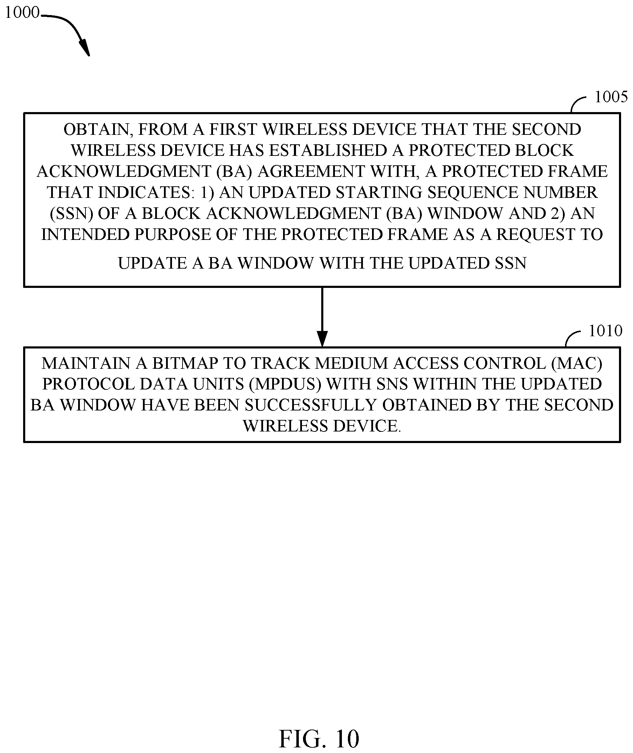

**FIG. 10** is a flow diagram illustrating example operations 1000 for wireless communications, in accordance with certain aspects of the present disclosure. Operations 1000 may be performed, for example, by a second wireless device (e.g., a STA).

Operations 1000 begin, at 1005, by obtaining, from a first wireless device that the second wireless device has established a protected block acknowledgment (BA) agreement with, a protected frame that indicates: 1) an updated starting sequence number (SSN) of a block acknowledgment (BA) window and 2) an intended purpose of the protected frame as a request to update a BA window with the updated SSN. At 1010, the second wireless device maintains a bitmap to track medium access control (MAC) Protocol Data Units (MPDUs) with SNs within the updated BA window have been successfully obtained by the second wireless device.

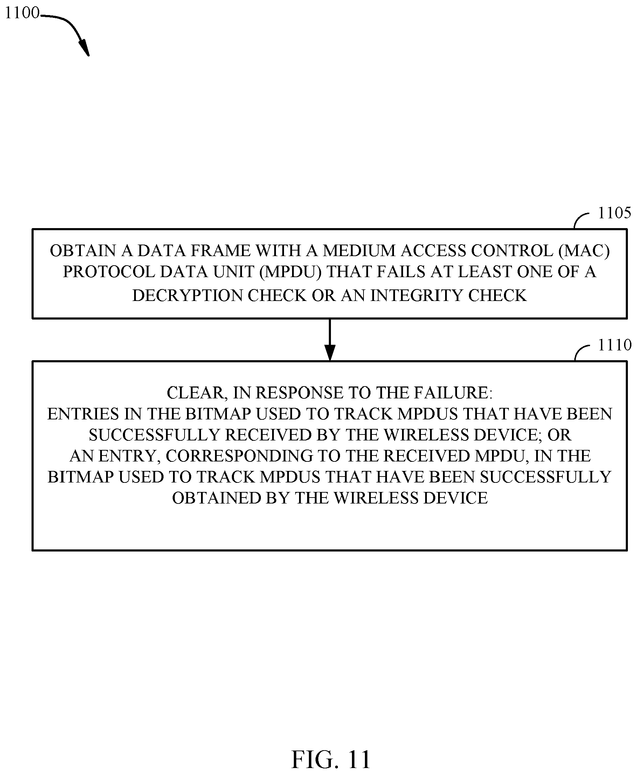

**FIG. 11** is a flow diagram illustrating example operations 1100 for wireless communications, in accordance with certain aspects of the present disclosure. Operations 1100 may be performed, for example, by a wireless device (e.g., a STA).

Operations 1100 begin, at 1105, by obtaining a data frame with a medium access control (MAC) Protocol Data Unit (MPDU) that fails at least one of a decryption check or an integrity check. At 1110, the wireless device clears, in response to the failure: entries in the bitmap used to track MPDUs that have been successfully obtained by the wireless device; or an entry, corresponding to the received MPDU, in the bitmap used to track MPDUs that have been successfully obtained by the wireless device.

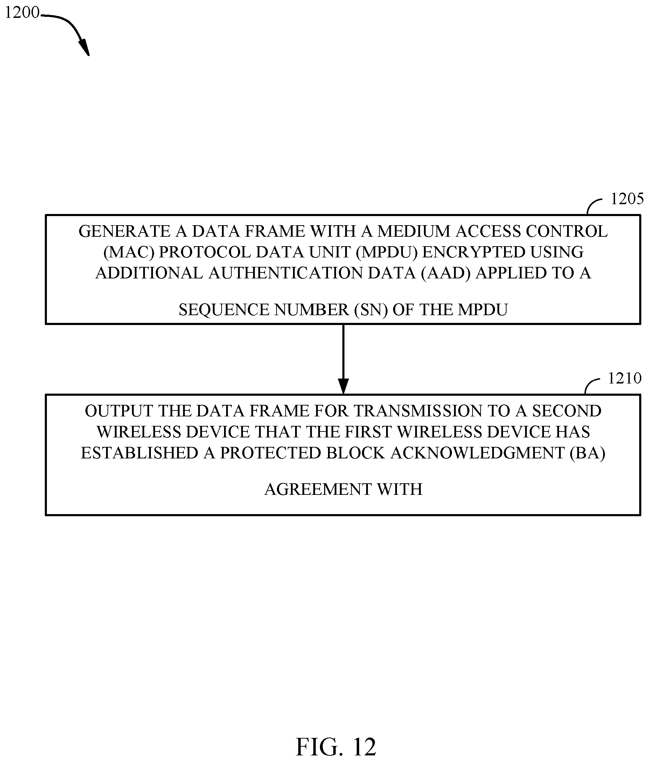

**FIG. 12** is a flow diagram illustrating example operations 1200 for wireless communications, in accordance with certain aspects of the present disclosure. Operations 1200 may be performed, for example, by a first wireless device (e.g., a STA).

Operations 1200 begin, at 1205, by generating a data frame with a medium access control (MAC) Protocol Data Unit (MPDU) encrypted using additional authentication data (AAD) applied to a sequence number (SN) of the MPDU. At 1210, the first wireless device outputs the data frame for transmission to a second wireless device that the first wireless device has established a protected block acknowledgment (BA) agreement with.

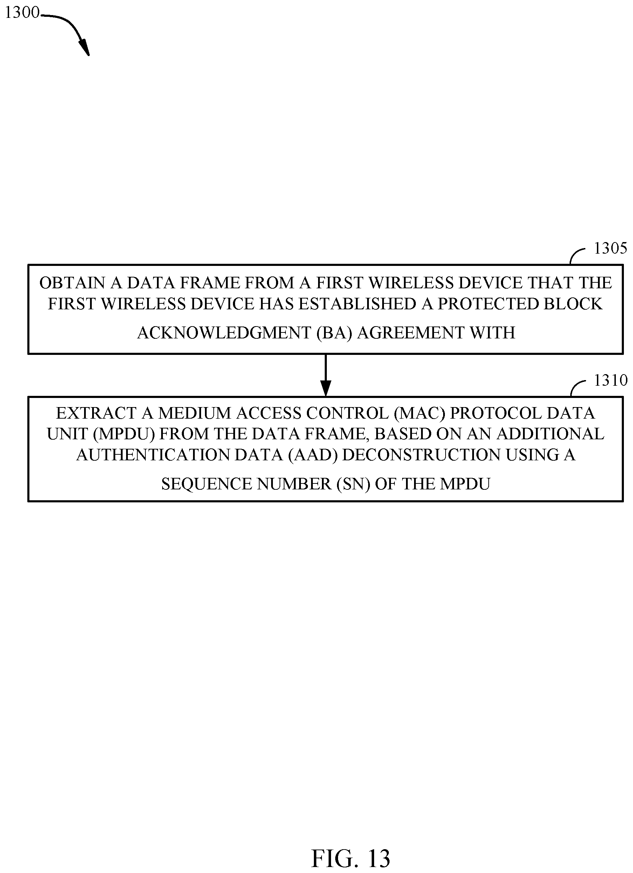

**FIG. 13** is a flow diagram illustrating example operations 1300 for wireless communications, in accordance with certain aspects of the present disclosure. Operations 1300 may be performed, for example, by a second wireless device (e.g., a STA).

Operations 1300 begin, at 1305, by obtaining a data frame from a first wireless device that the first wireless device has established a protected block acknowledgment (BA) agreement with. At 1310, the second wireless device extracts a medium access control (MAC) Protocol Data Unit (MPDU) from the data frame, based on an additional authentication data (AAD) deconstruction using a sequence number (SN) of the MPDU.

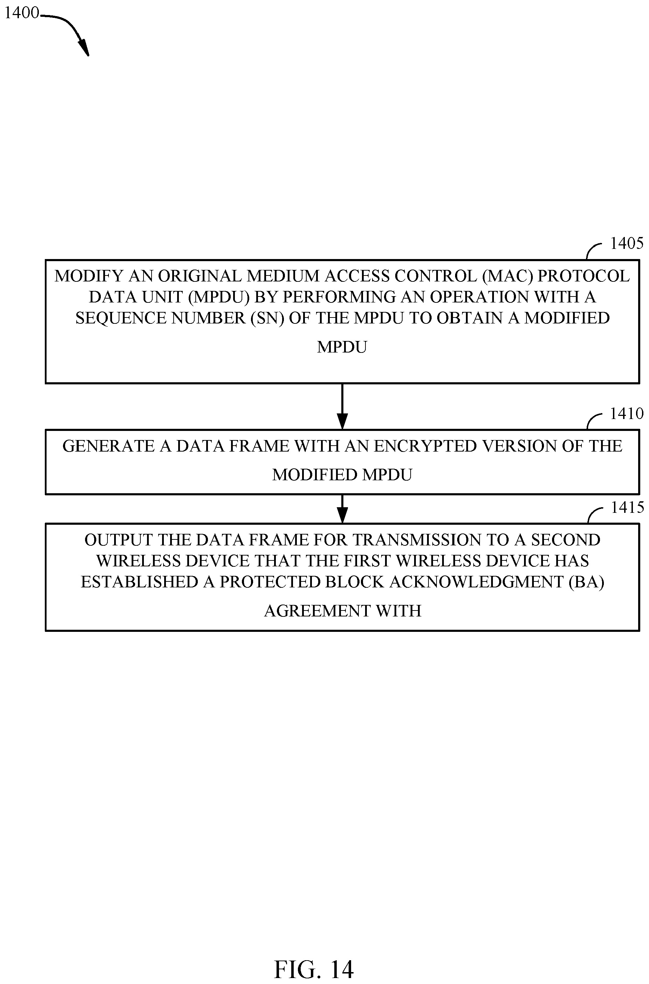

**FIG. 14** is a flow diagram illustrating example operations 1400 for wireless communications, in accordance with certain aspects of the present disclosure. Operations 1400 may be performed, for example, by a first wireless device (e.g., a STA).

Operations 1400 begin, at 1405, by modifying an original medium access control (MAC) Protocol Data Unit (MPDU) by performing an operation with a sequence number (SN) of the MPDU to obtain a modified MPDU. At 1410, the first wireless device generates a data frame with an encrypted version of the modified MPDU. At 1415, the first wireless device outputs the data frame for transmission to a second wireless device that the first wireless device has established a protected block acknowledgment (BA) agreement with.

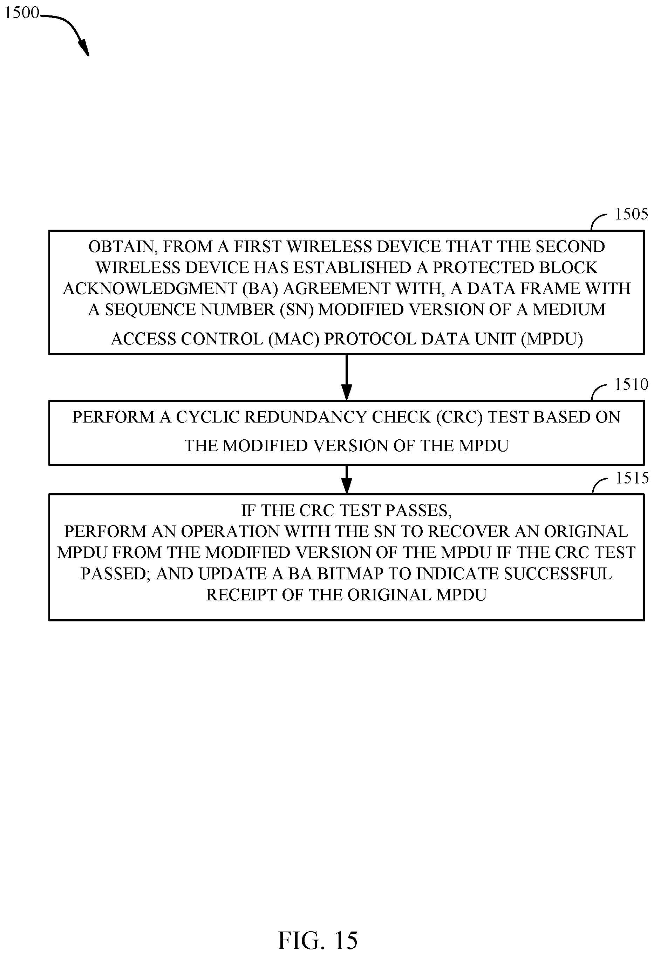

**FIG. 15** is a flow diagram illustrating example operations 1500 for wireless communications, in accordance with certain aspects of the present disclosure. Operations 1500 may be performed, for example, by a second wireless device (e.g., a STA).

Operations 1500 begin, at 1505, by obtaining, from a first wireless device that the second wireless device has established a protected block acknowledgment (BA) agreement with, a data frame with a sequence number (SN) modified version of a medium access control (MAC) Protocol Data Unit (MPDU). At 1510, the first wireless device performs a cyclic redundancy check (CRC) test based on the modified version of the MPDU. At 1515, if the CRC test passes, the second wireless device performs an operation with the SN to recover an original MPDU from the modified version of the MPDU if the CRC test passed and updates a BA bitmap to indicate successful receipt of the original MPDU.

The various operations of methods described above may be performed by any suitable means capable of performing the corresponding functions. The means may include various hardware or software component(s) or module(s), including, but not limited to a circuit, an application specific integrated circuit (ASIC), or processor. Generally, where there are operations illustrated in figures, those operations may have corresponding counterpart means-plus-function components with similar numbering.

### Example Device

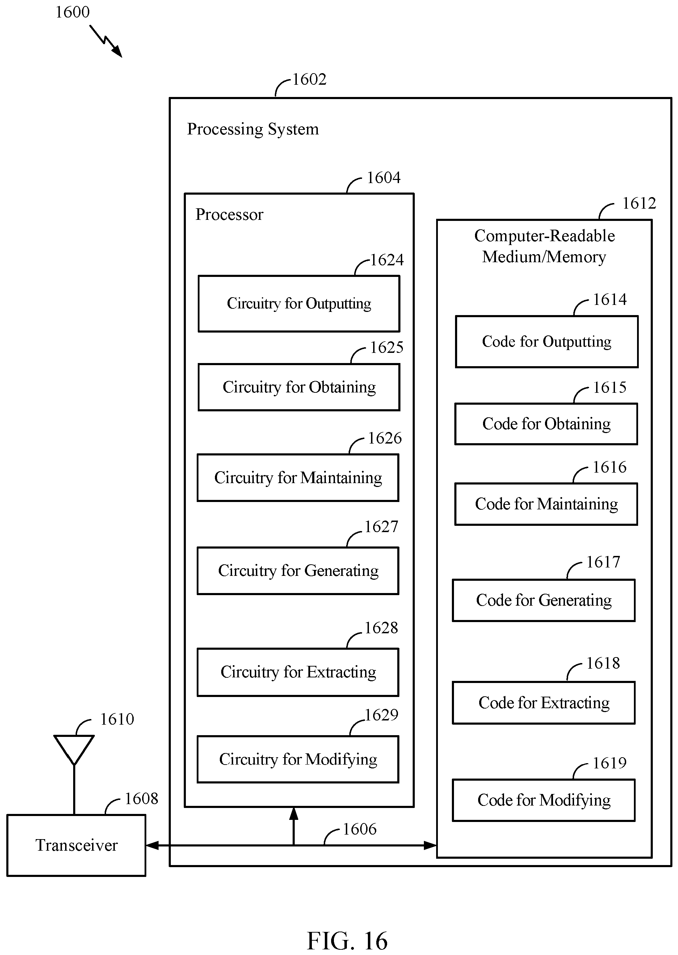

**FIG. 16** illustrates a communications device 1600 that may include various components (such as corresponding to means-plus-function components) operable, configured, or adapted to perform operations for the techniques disclosed herein, such as the operations illustrated in **FIGs. 9-15****.**

Communications device 1600 includes a processing system 1602 coupled to a transceiver 1608 (such as a transmitter or a receiver). Transceiver 1608 is configured to transmit and receive signals for the communications device 1600 via an antenna 1610, such as the various signals as described herein. Processing system 1602 may be configured to perform processing functions for the communications device 1600, including processing signals received or to be transmitted by the communications device 1600.

Processing system 1602 includes a processor 1604 coupled to a computer-readable medium/memory 1612 via a bus 1606. In certain aspects, computer-readable medium/memory 1612 is configured to store instructions (such as computer-executable code) that when executed by processor 1604, cause processor 1604 to perform the operations illustrated in **FIGs. 9-15****,** or other operations for performing the various techniques discussed herein.

In certain aspects, computer-readable medium/memory 1612 stores code 1614 (such as an example of means for) for outputting, code 1615 (such as an example of means for) for obtaining, code 1616 (such as an example of means for) for maintaining, code 1617 (such as an example of means for) for generating, code 1618 (such as an example of means for) for extracting, and code 1619 (such as an example of means for) for modifying.

In certain aspects, processor 1604 has circuitry configured to implement the code stored in the computer-readable medium/memory 1612. Processor 1604 includes circuitry 1624 (such as an example of means for) for outputting, circuitry 1625 (such as an example of means for) for obtaining, code 1626 (such as an example of means for) for generating, code 1627 (such as an example of means for) for extracting, and circuitry 1630 (such as an example of means for) for modifying.

Transceiver 1608 may provide a means for receiving information such as packets, user data, or control information associated with various information channels (such as control channels, data channels, etc.). Information may be passed on to other components of the device 1600. Transceiver 1608 may be an example of aspects of the transceiver 254 described with reference to **FIG. 2**. Antenna 1610 may correspond to a single antenna or a set of antennas. Transceiver 1608 may provide means for transmitting signals generated by other components of the device 1600.

In some cases, rather than actually transmitting a frame a device may have an interface to output a frame for transmission (a means for outputting). For example, a processor may output a frame, via a bus interface, to a radio frequency (RF) front end for transmission. Similarly, rather than actually receiving a frame, a device may have an interface to obtain a frame received from another device (a means for obtaining). For example, a processor may obtain (or receive) a frame, via a bus interface, from an RF front end for reception. In some cases, the interface to output a frame for transmission and the interface to obtain a frame (which may be referred to as first and second interfaces herein) may be the same interface.

Means for establishing, means for maintaining, means for generating, means for extracting, and/or means for modifying may include any of the various processors and/or transceivers shown in FIGs. 2 or 16.

### Additional Considerations

As used herein, the term "determining" encompasses a wide variety of actions. For example, "determining" may include calculating, computing, processing, deriving, investigating, looking up (such as looking up in a table, a database or another data structure), ascertaining and the like. Also, "determining" may include receiving (such as receiving information), accessing (such as accessing data in a memory) and the like. Also, "determining" may include resolving, selecting, choosing, establishing and the like.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various illustrative logics, logical blocks, modules, circuits and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to other implementations without departing from the scope of protection defined by the appended claims.

Certain features that are described in this specification in the context of separate implementations also can be implemented in combination in a single implementation. Conversely, various features that are described in the context of a single implementation also can be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted can be incorporated in the example processes that are schematically illustrated. For example, one or more additional operations can be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products. Additionally, other implementations are within the scope of the following claims. In some cases, the actions recited in the claims can be performed in a different order and still achieve desirable results.

## Claims

1. An apparatus for wireless communications, comprising:
memory comprising instructions; and
one or more processors configured to execute the instructions and cause the apparatus to:
generate (905) a protected frame that indicates: 1) an updated starting sequence number, SSN, of a block acknowledgment, BA, window and 2) an intended purpose of the protected frame as a request to update a BA window with the updated SSN;
output (910), for transmission to a wireless device that the apparatus has established a protected block acknowledgment, BA, agreement with, the protected frame;
generate (915) multiple medium access control, MAC, Protocol Data Units, MPDUs, with SNs within the updated BA window; and
output (920), for transmission to the wireless device, the multiple MPDUs.

2. The apparatus of claim 1, wherein the one or more processors are further configured to execute the instructions and cause the apparatus to:
output, for transmission to the wireless device, an MPDU indicating a BA request; and
obtain, from the wireless device in response to the request, a BA indicating which of the MPDUs within the updated BA window were successfully received by the wireless device.

3. The apparatus of claim 1, wherein the protected frame comprises a BA action frame designed for updating the BA window.

4. The apparatus of claim 3, wherein the protected frame indicates the intended purpose via at least one of a category field or BA action field of the protected frame.

5. The apparatus of claim 1 wherein the one or more processors are further configured to execute the instructions and cause the apparatus to obtain, from the wireless device, an acknowledgment of the protected frame.

6. The apparatus of claim 1, wherein the protected frame comprises an add BA, ADDBA, request frame, preferably wherein the protected frame includes a field set to a certain value to indicate the intended purpose, more preferably wherein the field is in a frame header of the ADDBA request frame.

7. The apparatus of claim 1, further comprising at least one transceiver configured to transmit the protected frame and the multiple MPDUs, wherein the apparatus is configured as a wireless device.

8. A method for wireless communications executed by an apparatus, comprising:
generating (905) a protected frame that indicates: 1) an updated starting sequence number, SSN, of a block acknowledgment, BA, window and 2) an intended purpose of the protected frame as a request to update a BA window with the updated SSN;
outputting (910), for transmission to a wireless device that the apparatus has established a protected block acknowledgment, BA, agreement with, the protected frame;
generating (915) multiple medium access control, MAC, Protocol Data Units, MPDUs, with SNs within the updated BA window; and
outputting (920), for transmission to the wireless device, the multiple MPDUs.

9. An apparatus for wireless communications, comprising:
memory comprising instructions; and
one or more processors configured to execute the instructions and cause the apparatus to:
obtaining (1005), from a wireless device that the apparatus has established a protected block acknowledgment, BA, agreement with, a protected frame that indicates: 1) an updated starting sequence number, SSN, of a block acknowledgment, BA, window and 2) an intended purpose of the protected frame as a request to update a BA window with the updated SSN ; and
maintaining (1010) a bitmap to track medium access control, MAC, Protocol Data Units, MPDUs, with SNs within the updated BA window that have been successfully obtained by the apparatus.

10. The apparatus of claim 9, wherein the one or more processors are further configured to execute the instructions and cause the apparatus to:
obtain, from the wireless device, a BA request; and
output, for transmission to the wireless device, an MPDU indicating a BA indicating which of the MPDUs within the updated BA window were successfully obtained by the apparatus in accordance with the bitmap.

11. The apparatus of claim 9, wherein the protected frame comprises a BA action frame designed for updating the BA window, preferably wherein the protected frame indicates the intended purpose via at least one of a category field or BA action field of the protected frame.

12. The apparatus of claim 9, wherein the one or more processors are further configured to execute the instructions and cause the apparatus to output, for transmission to the apparatus, an acknowledgment of the protected frame.

13. The apparatus of claim 9, wherein the protected frame comprises an add BA, ADDBA, request frame, preferably wherein the ADDBA request frame includes a field set to a certain value to indicate the intended purpose, more preferably wherein the field is in a frame header of the ADDBA request frame.

14. The apparatus of claim 9, further comprising at least one transceiver configured to receive the protected frame, wherein the apparatus is configured as a wireless device.

15. A method for wireless communications executed by an apparatus, comprising:
obtaining (1005), from a wireless device that the apparatus has established a protected block acknowledgment, BA, agreement with, a protected frame that indicates: 1) an updated starting sequence number, SSN, of a block acknowledgment, BA, window and 2) an intended purpose of the protected frame as a request to update a BA window with the updated SSN ; and
maintaining (1010) a bitmap to track medium access control, MAC, Protocol Data Units, MPDUs, with SNs within the updated BA window that have been successfully obtained by the apparatus.

## Patentansprüche

1. Eine Vorrichtung für drahtlose Kommunikationen, aufweisend:
Speicher, der Anweisungen aufweist; und
einen oder mehrere Prozessoren, die konfiguriert sind, um die Anweisungen auszuführen und die Vorrichtung zu veranlassen zum:
Erzeugen (905) eines geschützten Rahmens, der anzeigt: 1) eine aktualisierte Startsequenznummer, SSN, eines Blockbestätigungs-, BA-, Fensters und 2) einen beabsichtigten Zweck des geschützten Rahmens als eine Anforderung zum Aktualisieren eines BA-Fensters mit der aktualisierten SSN;
Ausgeben (910), zur Übertragung an ein drahtloses Gerät, dass die Vorrichtung eine geschützte Blockbestätigungs-, BA-, Vereinbarung mit dem geschützten Rahmen hergestellt hat;
Erzeugen (915) mehrerer Medienzugriffssteuerungs-, MAC-, Protokolldateneinheiten, MPDUs, mit SNs innerhalb des aktualisierten BA-Fensters; und
Ausgeben (920), zur Übertragung an das drahtlose Gerät, der mehreren MPDUs.

2. Die Vorrichtung gemäß Anspruch 1, wobei der eine oder die mehreren Prozessoren ferner konfiguriert sind, um die Anweisungen auszuführen und die Vorrichtung zu veranlassen zum:
Ausgeben, zur Übertragung an das drahtlose Gerät, einer MPDU, die eine BA-Anforderung anzeigt; und
Erhalten, von dem drahtlosen Gerät als Reaktion auf die Anforderung, einer BA, die anzeigt, welche der MPDUs innerhalb des aktualisierten BA-Fensters erfolgreich durch das drahtlose Gerät empfangen wurden.

3. Die Vorrichtung nach Anspruch 1, wobei der geschützte Rahmen einen BA-Aktionsrahmen aufweist, der zum Aktualisieren des BA-Fensters ausgelegt ist.

4. Die Vorrichtung nach Anspruch 3, wobei der geschützte Rahmen den beabsichtigten Zweck über zumindest eines von einem Kategoriefeld oder einem BA-Aktionsfeld des geschützten Rahmens anzeigt.

5. Die Vorrichtung gemäß Anspruch 1, wobei der eine oder die mehreren Prozessoren ferner konfiguriert sind, um die Anweisungen auszuführen und die Vorrichtung zu veranlassen, von dem drahtlosen Gerät eine Bestätigung des geschützten Rahmens zu erhalten.

6. Die Vorrichtung nach Anspruch 1, wobei der geschützte Rahmen einen Hinzufügen-BA-, ADDBA-, Anforderungsrahmen aufweist, wobei der geschützte Rahmen vorzugsweise ein Feld aufweist, das auf einen bestimmten Wert gesetzt ist, um den beabsichtigten Zweck anzuzeigen, wobei sich das Feld stärker bervorzugt in einem Rahmen-Header des ADDBA-Anforderungsrahmens befindet.

7. Die Vorrichtung nach Anspruch 1, ferner aufweisend zumindest einen Sendeempfänger, der konfiguriert ist, um den geschützten Rahmen und die mehreren MPDUs zu übertragen, wobei die Vorrichtung als ein drahtloses Gerät konfiguriert ist.

8. Ein Verfahren für drahtlose Kommunikationen, das durch eine Vorrichtung ausgeführt wird, aufweisend:
Erzeugen (905) eines geschützten Rahmens, der anzeigt: 1) eine aktualisierte Startsequenznummer, SSN, eines Blockbestätigungs-, BA-, Fensters und 2) einen beabsichtigten Zweck des geschützten Rahmens als eine Anforderung zum Aktualisieren eines BA-Fensters mit der aktualisierten SSN;
Ausgeben (910), zur Übertragung an ein drahtlose Gerät, dass die Vorrichtung eine geschützte Blockbestätigungs-, BA-, Vereinbarung mit dem geschützten Rahmen hergestellt hat;
Erzeugen (915) mehrerer Medienzugriffssteuerungs-, MAC-, Protokolldateneinheiten, MPDUs, mit SNs innerhalb des aktualisierten BA-Fensters; und
Ausgeben (920), zur Übertragung an das drahtlose Gerät, der mehreren MPDUs.

9. Eine Vorrichtung für drahtlose Kommunikationen, aufweisend:
Speicher, der Anweisungen aufweist; und
einen oder mehrere Prozessoren, die konfiguriert sind, um die Anweisungen auszuführen und die Vorrichtung zu veranlassen zum:
Erhalten (1005), von einem drahtlosen Gerät, dass die Vorrichtung eine geschützte Blockbestätigungs-, BA-, Vereinbarung mit einem geschützten Rahmen hergestellt hat, der anzeigt: 1) eine aktualisierte Startsequenznummer, SSN, eines Blockbestätigungs-, BA-, Fensters und 2) einen beabsichtigten Zweck des geschützten Rahmens als eine Anforderung zum Aktualisieren eines BA-Fensters mit der aktualisierten SSN; und
Aufrechterhalten (1010) einer Bitmap zum Verfolgen von Medienzugriffssteuerungs-, MAC-, Protokolldateneinheiten, MPDUs, mit SNs innerhalb des aktualisierten BA-Fensters, die erfolgreich durch die Vorrichtung erhalten wurden.

10. Die Vorrichtung gemäß Anspruch 9, wobei der eine oder die mehreren Prozessoren ferner konfiguriert sind, um die Anweisungen auszuführen und die Vorrichtung zu veranlassen zum:
Erhalten, von dem drahtlosen Gerät, einer BA-Anforderung; und
Ausgeben, zur Übertragung an das drahtlose Gerät, einer MPDU, die eine BA anzeigt, die anzeigt, welche der MPDUs innerhalb des aktualisierten BA-Fensters erfolgreich durch die Vorrichtung gemäß der Bitmap erhalten wurden.

11. Die Vorrichtung nach Anspruch 9, wobei der geschützte Rahmen einen BA-Aktionsrahmen aufweist, der zum Aktualisieren des BA-Fensters ausgelegt ist, wobei der geschützte Rahmen vorzugsweise den beabsichtigten Zweck über zumindest eines von einem Kategoriefeld oder einem BA-Aktionsfeld des geschützten Rahmens anzeigt.

12. Die Vorrichtung gemäß Anspruch 9, wobei der eine oder die mehreren Prozessoren ferner konfiguriert sind, um die Anweisungen auszuführen und die Vorrichtung zu veranlassen, zur Übertragung an die Vorrichtung eine Bestätigung des geschützten Rahmens auszugeben.

13. Die Vorrichtung nach Anspruch 9, wobei der geschützte Rahmen einen Hinzufügen-BA-, ADDBA-, Anforderungsrahmen aufweist, wobei der ADDBA-Anforderungsrahmen vorzugsweise ein Feld aufweist, das auf einen gewissen Wert gesetzt ist, um den beabsichtigten Zweck anzuzeigen, wobei sich das Feld stärker bevorzugt in einem Rahmen-Header des ADDBA-Anforderungsrahmens befindet.

14. Die Vorrichtung gemäß Anspruch 9, ferner aufweisend zumindest einen Sendeempfänger, der konfiguriert ist, um den geschützten Rahmen zu empfangen, wobei die Vorrichtung als ein drahtloses Gerät konfiguriert ist.

15. Ein Verfahren für drahtlose Kommunikationen, das durch eine Vorrichtung ausgeführt wird, aufweisend:
Erhalten (1005), von einem drahtlosen Gerät, mit dem die Vorrichtung eine geschützte Blockbestätigungs-, BA-, Vereinbarung hergestellt hat, eines geschützten Rahmens, der anzeigt: 1) eine aktualisierte Startsequenznummer, SSN, eines Blockbestätigungs-, BA-, Fensters und 2) einen beabsichtigten Zweck des geschützten Rahmens als eine Anforderung zum Aktualisieren eines BA-Fensters mit der aktualisierten SSN; und
Aufrechterhalten (1010) einer Bitmap zum Verfolgen von Medienzugriffssteuerungs-, MAC-, Protokolldateneinheiten, MPDUs, mit SNs innerhalb des aktualisierten BA-Fensters, die erfolgreich durch die Vorrichtung erhalten wurden.

## Revendications

1. Appareil pour la communication sans fil, comprenant : une mémoire comprenant des instructions ; et
un ou plusieurs processeurs configurés pour exécuter les instructions et amener l'appareil à :
générer (905) une trame protégée qui indique : 1) un numéro de séquence de départ, SSN, mis à jour d'une fenêtre d'accusé de réception de bloc, BA, et 2) une finalité prévue de la trame protégée en tant que requête de mise à jour d'une fenêtre BA avec le SSN mis à jour ;
délivrer (910) la trame protégée pour transmission à un dispositif sans fil avec lequel l'appareil a établi un accord d'accusé de réception de bloc, BA, protégé ;
générer (915) de multiples unités de données de protocole de contrôle d'accès au support, MAC, MPDU, avec des SN dans la fenêtre BA mise à jour ; et
délivrer (920) les multiples MPDU pour transmission vers le dispositif sans fil.

2. L'appareil selon la revendication 1, dans lequel les un ou plusieurs processeurs sont en outre configurés pour exécuter les instructions et amener l'appareil à :
délivrer, pour transmission au dispositif sans fil, une MPDU indiquant une requête BA ; et
obtenir, à partir du dispositif sans fil en réponse à la requête, un BA indiquant laquelle des MPDU à l'intérieur de la fenêtre BA mise à jour a été reçue avec succès par le dispositif sans fil.

3. L'appareil selon la revendication 1, dans lequel la trame protégée comprend une trame d'action BA conçue pour mettre à jour la fenêtre BA.

4. L'appareil selon la revendication 3, dans lequel la trame protégée indique la finalité prévue via au moins l'un parmi un champ de catégorie ou un champ d'action BA de la trame protégée.

5. L'appareil selon la revendication 1, dans lequel les un ou plusieurs processeurs sont en outre configurés pour exécuter les instructions et amener l'appareil à obtenir, à partir du dispositif sans fil, un accusé de réception de la trame protégée.

6. L'appareil selon la revendication 1, dans lequel la trame protégée comprend une trame de requête d'ajout BA, ADDBA, de préférence dans lequel la trame protégée inclut un champ établi à une certaine valeur pour indiquer la finalité prévue, de manière davantage préférée dans lequel le champ est dans un en-tête de trame de la trame de requête ADDBA.

7. L'appareil selon la revendication 1, comprenant en outre au moins un émetteurrécepteur configuré pour transmettre la trame protégée et les multiples MPDU, dans lequel l'appareil est configuré en dispositif sans fil.

8. Un procédé de communication sans fil exécuté par un appareil, comprenant :
la génération (905) d'une trame protégée qui indique : 1) un numéro de séquence de départ, SSN, mis à jour d'une fenêtre d'accusé de réception de bloc, BA, et 2) une finalité prévue de la trame protégée en tant que requête de mise à jour d'une fenêtre BA avec le SSN mis à jour ;
la délivrance (910) de la trame protégée pour transmission à un dispositif sans fil avec lequel l'appareil a établi un accord d'accusé de réception de bloc, BA, protégé ;
la génération (915) de multiples unités de données de protocole de contrôle d'accès au support, MAC, MPDU, avec des SN dans la fenêtre BA mise à jour ; et
la délivrance (920) des multiples MPDU pour transmission vers le dispositif sans fil.

9. Un appareil pour la communication sans fil, comprenant :
une mémoire comprenant des instructions ; et
un ou plusieurs processeurs configurés pour exécuter les instructions et amener l'appareil à :
obtenir (1005), à partir d'un dispositif sans fil avec lequel l'appareil a établi un accord d'accusé de réception de bloc, BA, protégé, une trame protégée qui indique : 1) un numéro de séquence de départ, SSN, mis à jour d'une fenêtre d'accusé de réception de bloc, BA, et 2) une finalité prévue de la trame protégée en tant que requête de mise à jour d'une fenêtre BA avec le SSN mis à jour ; et
maintenir (1010) un bitmap pour suivre des unités de données de protocole de contrôle d'accès au support, MAC, MPDU, avec des SN dans la fenêtre BA mise à jour, qui ont été obtenues avec succès par l'appareil.

10. L'appareil selon la revendication 9, dans lequel les un ou plusieurs processeurs sont en outre configurés pour exécuter les instructions et amener l'appareil à :
obtenir, à partir du dispositif sans fil, une requête BA ; et
délivrer, pour transmission au dispositif sans fil, une MPDU indiquant un BA indiquant lesquelles des MPDU à l'intérieur de la fenêtre BA mise à jour ont été obtenues avec succès par l'appareil conformément au bitmap.

11. L'appareil selon la revendication 9, dans lequel la trame protégée comprend une trame d'action BA conçue pour mettre à jour la fenêtre BA, de préférence dans lequel la trame protégée indique la finalité prévue via au moins l'un parmi un champ de catégorie ou un champ d'action BA de la trame protégée.

12. L'appareil selon la revendication 9, dans lequel les un ou plusieurs processeurs sont en outre configurés pour exécuter les instructions et amener l'appareil à délivrer, pour transmission à l'appareil, un accusé de réception de la trame protégée.

13. L'appareil selon la revendication 9, dans lequel la trame protégée comprend une trame de requête d'ajout BA, ADDBA, de préférence dans lequel la trame de requête ADDBA inclut un champ établi à une certaine valeur pour indiquer la finalité prévue, de manière davantage préférée dans lequel le champ est dans un en-tête de trame de la trame de requête ADDBA.

14. L'appareil selon la revendication 9, comprenant en outre au moins un émetteurrécepteur configuré pour recevoir la trame protégée, dans lequel l'appareil est configuré en dispositif sans fil.

15. Un procédé de communication sans fil exécuté par un appareil, comprenant :
l'obtention (1005), à partir d'un dispositif sans fil avec lequel l'appareil a établi un accord d'accusé de réception de bloc, BA, protégé, d'une trame protégée qui indique : 1) un numéro de séquence de départ, SSN, mis à jour d'une fenêtre d'accusé de réception de bloc, BA, et 2) une finalité prévue de la trame protégée en tant que requête de mise à jour d'une fenêtre BA avec le SSN mis à jour ; et
le maintien (1010) d'un bitmap pour suivre des unités de données de protocole de contrôle d'accès au support, MAC, MPDU, avec des SN dans la fenêtre BA mise à jour, qui ont été obtenues avec succès par l'appareil.
